# EUROPEAN PATENT SPECIFICATION

(11) **EP 2 628 204 B1**
(45) Date of publication and mention of the grant of the patent: **06.06.2018**
(21) Application number: 11832049.8
(22) Date of filing: 13.10.2011
(51) Int. Cl.: H01M 2/30, H01M 2/32, H01M 2/06, H01M 10/0525

(54) **LITHIUM-ION BATTERY**
LITHIUM-IONEN BATTERIE
BATTERIE AU LITHIUM-ION

(30) Priority: 16.10.2010 CN 201020569273 U; 16.10.2010 CN 201010513264
(43) Date of publication of application: 21.08.2013
(73) Proprietor: Shenzhen BYD Auto R&D Company Limited, Shenzhen, Guangdong 518118 (CN); BYD Company Limited, Shenzhen, Guangdong 518118 (CN)
(72) Inventor: WU, Guanglin, Shenzhen Guangdong 518118 (CN); SUN, Huajun, Shenzhen Guangdong 518118 (CN); PAN, Liying, Shenzhen Guangdong 518118 (CN)
(74) Representative: m patent group
(86) International application number: PCT/CN2011/080764
(87) International publication number: WO 2012/048652

(56) References cited:
- CN-U- 201 868 522
- CN-Y- 2 899 126
- JP-A- 6 026 732
- JP-A- 2001 283 926
- JP-A- 2002 260 631
- JP-A- 2008 186 591
- US-A- 4 309 492
- US-A1- 2004 170 887
- US-A1- 2005 238 930

## Description

### FIELD

The present disclosure relates to the field of energy storage, more particularly to an improved lithium-ion battery.

### BACKGROUND

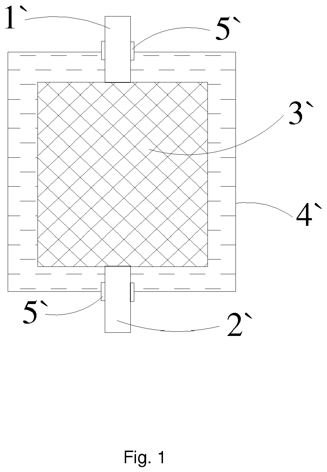

At present, as shown in Fig. 1, a lithium-ion battery may comprise a housing 4', a battery core 3', and an electrolyte within the housing 4'. The battery core 3' has a positive terminal 1' and a negative terminal 2'. And an insulating component 5' is disposed between the positive terminal 1' and the housing 4' or between negative terminal 2' and the housing 4'. The housing 4' is just a container, and does not participate in the electrochemical reaction of the lithium-ion battery.

Conventionally, the housing 4' is made by metal materials, and it may be corroded by an electrolyte solution comprising a lithium salt, an additive, an organic solvent etc. The corrosion of the metal housing may shorten the life of the battery and cause battery leakage etc.

JP 2008 186591 A discloses a current-limiting means (resistive element) which is connected between the positive electrode terminal and the battery container of a lithium secondary battery. By this connection, the battery container and the positive electrode terminal are on the same potential and current which flows into the battery container is restricted, thus protecting the battery container from degeneration.

US 2004/170887 A1 teaches a PTC element and a thermal fuse being disposed in series with the negative electrical terminal on the one hand and the negative electrode lead extending from the negative electrode plate of the electrode assembly positioned within a battery case, on the other hand. By this arrangement of said reversible current regulation element and said non-reversible current cut off element, the battery is prevented from reaching an abnormally high temperature and becoming damaged, thus providing a battery safety function that operates under a plurality of temperature conditions.

Other battery arrangements are known from CN 2 899 126 Y, US 4 309 492 A, JP 2002 260 631 A, JP 2001 283926 A and US 2005/238930 A1.

### SUMMARY

In viewing thereof, the present disclosure is directed to solve at least one of the problems existing in the prior art. Therefore, a lithium-ion battery with improved safety may need to be provided.

According to an aspect of the present disclosure, a lithium-ion battery may be provided, comprising: a housing made by metal or metal alloy defining an opening end; a cover assembly sealing the opening end; a negative and a positive terminal penetrating through the cover assembly, which is insulated therefrom respectively; a battery core positioned within the housing which is electrically connected with the negative and positive terminal respectively; an electrolyte filled within a space formed by the housing and the cover assembly; and an electrical protection element electrically connected between the negative terminal and one of the cover assembly and the housing; the electrical protection element comprising a PTC resistor.

With the lithium-ion battery according to an embodiment of the present disclosure, during long-term use and storage, the housing may not be corroded by the electrolyte, thus avoiding the shortening of the service lifespan and the safety of the battery caused by the corrosion. On the other hand, the contamination and the loss of the electrolyte caused by the corrosion may also be avoided.

Additional aspects and advantages of the embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the invention will become apparent and more readily appreciated from the following descriptions taken in conjunction with the drawings in which:
Fig. 1 is a schematic view of a lithium-ion battery in prior art;
Fig. 2 is a schematic view of a lithium-ion battery according to an embodiment of the present disclosure; and
Fig. 3 is a partial enlarged view of a lithium-ion battery according to another embodiment of the present disclosure.

### DETAILED DESCRIPTION

Reference will be made in detail to embodiments of the present invention. The embodiments described herein with reference to drawings are
illustrative, and used to generally understand the present invention. The embodiments shall not be construed to limit the present invention. The same or similar elements and the elements having same or similar functions are denoted by like reference numerals throughout the descriptions.

It has been found by the inventors of the present disclosure that during long-term charging and discharging and use and storage, electrolyte salts, organic solvents, additives, etc. in the electrolyte may react with metal atoms in the metal housing, and the metal atoms may be converted into metal ions which may enter into the electrolyte. Therefore, the metal housing may be corroded, and consequently the performance of the metal housing may be deteriorated, thus affecting the safety and the service lifespan of the battery. On the other hand, the electrolyte may be polluted by the metal ions entering therein, thus negatively affecting the performance of the electrolyte in addition to other possible damages to the battery.

In viewing thereof, an improved lithium-ion battery according to the present disclosure will be described with reference to accompanying figures.

According to an embodiment of the present disclosure, the lithium-ion battery may comprise a housing made by metal or metal alloy defining an opening end; a cover assembly sealing the opening end; a negative and a positive terminal penetrating through the cover assembly, which is insulated therefrom respectively; a battery core positioned within the housing which is electrically connected with the negative and positive terminal respectively; an electrolyte filled within a space formed by the housing and the cover assembly; and an electrical protection element electrically connected between the negative terminal and one of the cover assembly and the housing.

According to an embodiment of the present disclosure, because the metal housing or the cover assembly may be connected with a negative electrode via the electrical protection element, a large number of electrons may be accumulated in the negative electrode, and then the electrons may be transferred onto the cover assembly or the metal housing. Because the cover assembly and the metal housing form a sealed structure, that is, the cover assembly is electrically connected with the metal housing, the electrons transferred onto the cover assembly may be transferred onto the metal housing. Under the action of the electrons, the atoms in the metal housing may not be converted into metal ions easily, thus preventing the metal housing from being corroded. Therefore, the metal housing may have an improved performance.

Moreover, the contamination of the electrolyte caused by the metal ions entering into the electrolyte may be avoided. In addition, when the positive terminal is contacted with the metal housing after a large external force is applied onto the battery, because the electrical protection element is disposed between the negative terminal and the metal housing or the cover assembly, the short circuit of the battery may be avoided, thus enhancing the safety of the battery.

In the following, a lithium-ion battery with two opening ends incorporating the inventive concept of the present disclosure will be described in detail. However, it should be noted that the inventive concept thereof may be applied to any type of lithium-ion battery, such as a lithium-ion with an opening end.

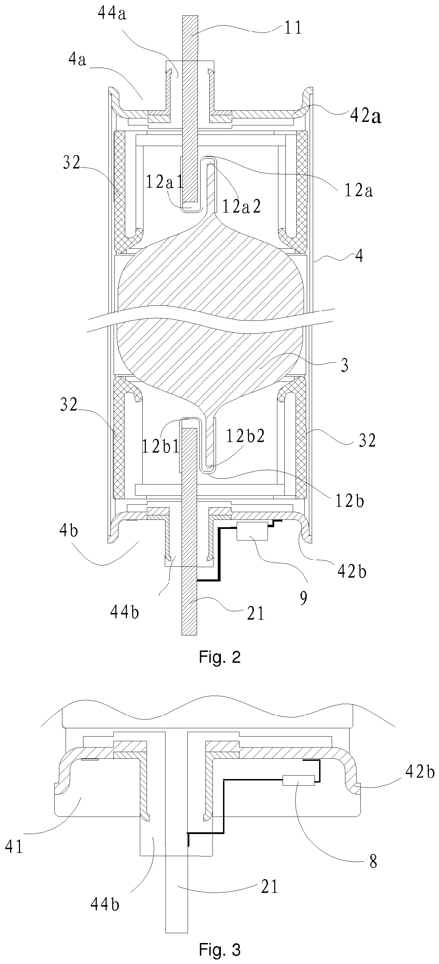

As shown in Fig. 2, according to an aspect of the present disclosure, the lithium-ion battery may comprise: a housing 4 made by metal or metal alloy defining a first open end 4a and a second open end 4b; a first cover assembly 42a and a second cover assembly 42b sealing the first open end 4a and the second open end 4b of the housing 4 respectively; a positive terminal 11 penetrating through the first cover assembly 42a which may be insulated from the first cover assembly 42a; a negative terminal 21 penetrating through the second cover assembly 42b which may be insulated from the second cover assembly 42b; a battery core 3 positioned within the housing 4 comprising a positive plate, a separator and a negative plate winding or overlapping together, with an end of the positive terminal 11 inside the housing 4 electrically connected with the positive plate and an end of the negative terminal 21 inside the housing 4 electrically connected with the negative plate respectively; an electrolyte filled within a space formed by the housing 4, and the first and second cover assemblies 42a, 42b; and an electrical protection element 9 electrically connected between the negative terminal 21 and one of the second cover assembly 42b and the housing 4.

The housing 4 may be of any shape, for example, a prismatic shape or a cylindrical shape. The housing 4 may be made of aluminum, steel, nickel, or an alloy thereof.

In one embodiment, each of the first cover assembly 42a and the second cover assembly 42b may be made of material which is the same as that of the housing 4. In another embodiment, each of the first cover assembly 42a and the second cover assembly 42b may be made of material different from that of the housing 4.

The shape of each of the first cover assembly 42a and the second cover assembly 42b may be configured to be mated with the shape of the housing 4 so that a sealed structure may be formed.

As known in the art, the positive plate may include a positive current collector and a positive material coated onto the positive current collector, and the positive material and the coating method may be known to those skilled in the art. The negative plate may include a negative current collector and a negative material coated onto the negative current collector, and the negative material and the coating method may be known to those skilled in the art.

As shown in Fig. 2, the battery core 3 may be fixed by a pair of spacers 32 in a cavity formed by the housing 4 and the first and second cover assemblies 42a, 42b. The battery core 3 may be prepared by winding or overlapping the positive plate, the separator and the negative plate in turn; and the step of winding or overlapping may be known to those skilled in the art.

In one embodiment, the positive and negative terminals 11, 21 may be connected with tabs of the positive and negative plates via positive and negative flexible connecting pieces respectively.

The positive plate may include a positive tab for conducting current; and the negative plate may include a negative tab for conducting current. In one embodiment, the positive and negative tabs may be welded onto the positive and negative plates respectively. In another embodiment, the positive and negative tabs may be integrally formed with the positive and negative plates respectively in the following steps. The active material may be applied along a width of the current collector, with uncoated regions formed at two ends along the width; one uncoated region of the positive current collector may extend out of the separator at one end of the battery core, while one uncoated region of the negative current collector may extend out of the separator at the other end of the battery core. The extended portion of the positive current collector may be pressed and electrically connected to form a positive tab. And the extended portion of the negative current collector may be pressed and electrically connected to form a negative tab. The positive tab may be electrically connected with the positive terminal for conducting the current, and the negative tab may be electrically connected with the negative terminal for conducting the current.

In one embodiment, the positive and negative tabs may be welded onto the positive and negative plates respectively. The positive tab and the negative tab may be disposed on two ends of the battery core 3 respectively. Accordingly, the first and second cover assemblies 42a, 42b may be disposed on two ends of the battery core 3 respectively. The positive terminal 11 and the negative terminal 21 may be disposed on the first and second cover assemblies 42a, 42b respectively.

In another embodiment, the positive and negative tabs may be integrally formed with the positive and negative plates respectively. The positive tab and the negative tab may be disposed on two end of the battery core 3 respectively. Accordingly, the first and second cover assemblies 42a, 42b may be disposed on two ends of the battery core 3 respectively. The positive terminal 11 and the negative terminal 21 may be disposed on the first and second cover assemblies 42a, 42b respectively.

In some embodiments, the positive and negative tabs may be electrically connected with the positive and negative terminals 11, 21 directly. In other embodiments, the positive and negative tabs may be electrically connected with the positive and negative terminals 11, 21 via positive and negative flexible connecting pieces 12a, 12b respectively, as shown in Fig. 2.

In some embodiments, the positive and negative flexible connecting pieces 12a, 12b may be made of a plurality of metal foil layers. In one embodiment, the positive flexible connecting piece 12a connecting the positive terminal 11 with the tab of the positive plate may be made of a plurality of aluminum foil layers, and the negative flexible connecting piece 12b connecting the negative terminal 21 with the tab of the negative plate may be made of a plurality of copper foil layers. In one embodiment, the positive terminal 11 and the negative terminal 21 may be insulated from the first cover assembly 42a and the second cover assembly 42b respectively.

In some embodiments, the positive and negative flexible connecting pieces 12a, 12b may be improved by annealing treatment for enhancing toughness thereof.

In one embodiment, each of the positive and negative flexible connecting pieces 12a, 12b may have a bending part, and a bending guide piece may be disposed at the bending part. One end of the positive flexible connecting piece 12a may be connected to the external side of the tab of the positive plate away from the positive terminal 11, and the other end of the positive flexible connecting piece 12a may be connected to the external side of the positive terminal 11 away from the tab of the positive plate. One end of the negative flexible connecting piece 12b may be connected to the external side of the tab of the positive plate away from the negative terminal 21, and the other end of the negative flexible connecting piece 12b may be connected to the external side of the negative terminal 21 away from the tab of the negative plate. For example, each flexible connection piece 12a, 12b may have a S-shape with the tab and the terminal being respectively accommodated in the concave portions 12a1, 12a2, 12b1, 12b2 of the S-shape and connected to the inner walls of the concave portions 12a1, 12a2, 12b1, 12b2 facing toward each other. In this way, the tab may be coved by the flexible connecting piece at the bending part. When the battery is disposed under vibration, the connections of the tabs with the negative/positive terminal will not be damaged so that a secure electrical connection is ensured under severe conditions, such as vibrating, shaking or swinging etc.

The bending guide piece may comprise an arc portion and a strip; the arc portion forms the bending part, and the strip may be connected to the positive and negative flexible connecting pieces 12a, 12b respectively. In one embodiment, the arc portion and the strip may be integrally formed. In another embodiment, the arc portion may be welded to the strip.

The other ends of the positive and negative terminals 11, 21 may be extended out of the first and second cover assemblies 42a, 42b respectively.

In one embodiment, the first cover assembly 42a may be formed with a first via-hole through which the positive terminal 11 may be penetrated, with a first insulating seal element 44a disposed between the first via-hole and the first cover assembly 42a. In this way, the positive terminal 11 may be insulated from the first cover assembly 42a.

Similarly, in one embodiment, the second cover assembly 42b may be formed with a second via-hole through which the negative terminal 21 may be penetrated, with a second insulating seal element 44b disposed between the second via-hole and the second cover assembly 42b. In this way, the negative terminal 21 may be insulated from the second cover assembly 42b.

In one embodiment, a first protecting member (not shown) may be configured to be provided on and integrally formed with the first cover assembly 42a, and the first protecting member may be formed with a via-hole through which the positive terminal 11 penetrates.

In one embodiment, a second protecting member 41 may be configured to be provided on and integrally formed with the second cover assembly 42b, and the second protecting member 41 may be formed with a via-hole through which the negative terminal 21 penetrates. As shown in Fig. 3, the second protecting member 41 is formed on the external surface of the second cover assembly 42b, and the electrical protection element is embedded within the second protecting member 41.

In some embodiments, the first and second protecting members may be made of at least one material selected from the group consisting of plastic, rubber, and resin. The at least one material may have insulating properties, flame resistance, and electrolyte resistance. The plastic may include, but not limited to, PFA (polyfluoroalkoxy), PES (poly(ether sulfones)), or modified PP (polypropylene). The rubber may include, but not limited to, ethylene propylene diene monomer (EPDM). The resin may include, but not limited to, epoxy resin, or modified phenol-formaldehyde resin. In one embodiment, the first and second protecting members may be made of rubber.

In one embodiment, the first and second protecting members may have multi-parts, for example, including two parts divided along a line through the via-hole, which may be easy for assembly with the positive and negative terminals 11, 21 respectively.

In one embodiment, the multi-parts may be assembled into a fastening structure to form the first and second protecting members; and the shape of the fastening structure may be configured as practical needs may require, such as triangular, trapezoidal, square, rectangular or U-shape.

In one embodiment, the first and second protecting members may further comprise a vent to facilitate pressure relief when the safety valve of the battery is opened. In one embodiment, the vent may have a cross grating structure, thus protecting the safety valve from being destroyed by an external force.

In one embodiment, each of the first and second protecting members may have a boss along the edge thereof. Because an insulating tape may further be provided to cover the lithium-ion battery, when there are no protecting members, the insulating tape may cover sides and an upper surface of the boss, and four corners of the boss may puncture the insulating tape, thus increasing the safety accidents of the battery. According to an embodiment of the present disclosure, each of the first and second protecting members may have a stepped structure along the edges thereof, and consequently the first and second protecting members may be completely covered. Therefore, the insulating tape may only cover the sides of the boss, thus avoiding the four corners of the boss puncturing the insulating tape and eliminating the safety accidents of the battery accordingly.

In one embodiment, the positive and negative terminals 11, 21 each may be formed with a groove on an external surface thereof, which may be broken when the external force is applied to the battery.

In one embodiment, the groove may be formed by stamping, and the depth of the groove may be about 10% to 95% of the thickness of each of the positive and negative terminals 11, 21; and the width of the groove may be about 50% to 500% of the width of each of the positive and negative terminals 11, 21. In one embodiment, there may be one or more grooves formed on the positive and/or negative terminals 11, 21.

In some embodiments, the thickness of each of the positive and negative terminals 11, 21 may be about 0.2mm to about 20mm. In one embodiment, the thickness of each of the positive and negative terminals 11, 21 may be about 2.5mm.

In some embodiments, the positive and negative terminals 11, 21 may be made of pure copper or pure aluminum. In one embodiment, when the positive and negative terminals 11, 21 are made of pure copper, the depth of the groove may be about 50% to 90% of the thickness of each of the positive and negative terminals 11, 21, and the width of the groove may be about 100% to 500% of the width of each of the positive and negative terminals 11, 21. In another embodiment, when the positive and negative terminals 11, 21 are made of pure aluminum, the depth of the groove may be about 30% to 80% of the thickness of each of the positive and negative terminals 11, 21, and the width of the groove may be about 100% to 300% of the width of each of the positive and negative terminals 11, 21.

In some embodiments, the groove may be filled with filler having elasticity, conductivity and certain bonding strength. The filler may be tin, conductive plastics, or conductive rubbers etc.

In one embodiment, as shown in Fig. 3, the electrical protection element 9 may be electrically connected between the negative terminal 21 and the second cover assembly 42b. In another embodiment, the electrical protection element 9 may be electrically connected between the negative terminal 21 and the housing 4, as shown in Fig. 2.

In one embodiment, the electrical protection element 9 may comprise an insulating layer on a surface thereof. The insulating layer may be made of insulating coating, insulating ink, or other insulating materials coated onto the electrical protection element. In one embodiment, when the first and second protecting members are formed by injection molding, the insulating layer may be the first and second protecting members.

In one embodiment, the electrical protection element 9 may further comprise one or two elements selected from a resistance element and a current fusing element. In one embodiment, the resistance element may have a resistance of about 1 KΩ to about 1000 KΩ, particularly, about 1 KΩ to about 10 KΩ. In one embodiment, the current fusing element may have a fusing current greater than about 100 A. In one embodiment, the PTC resistor may have a zero-power resistance of about 1 mohm to about 100 mohm, and a maximum conduction current of the PTC resistor may about 10 A to 100 A.

### EXAMPLES 1-3

As shown in Fig 2, according to the manufacturing method described above, a resistance element with a resistance of 1 KΩ, a current fusing element, and a PTC resistor are used as the electrical protection element 9 to form lithium-ion batteries A1, A2, A3 respectively.

### COMPARATIVE EXAMPLE 1

In this comparative embodiment, a battery comprises a housing, an upper cover assembly and a lower cover assembly, a battery core, and an electrolyte.

The housing has two open ends sealed by the upper cover assembly and the lower cover assembly respectively to form a cavity. The battery core and the electrolyte are accommodated within the cavity, and the battery core is immersed in the electrolyte. The battery core comprises a positive plate, a separator and a negative plate winding together.

The positive plate includes a positive current collector and a positive material coated onto the positive current collector; the positive material is applied along a width of the positive current collector leaving uncoated regions at two ends along the width direction; one uncoated region at one end of the positive current collector is extended out of the separator; and the extended positive current collector are pressed and electrically connected to form a positive tab.

Similarly, the negative plate includes a negative current collector and a negative material coated on the negative current collector; the negative material is applied along a width of the negative current collector leaving uncoated regions at two ends along the width; one uncoated region at one end of the negative current collector is extended out of the separator; and the extended negative current collector are pressed and electrically connected to form a negative tab.

The positive and negative tabs are formed at the two ends of the battery core respectively. Similar to those described above, the battery core in this comparative example is fixed in the cavity by a pair of spacers.

The positive tab is connected to a positive terminal via a positive flexible connecting piece. The upper cover assembly has a first via-hole through which the positive terminal penetrates. A first insulating member such as an insulating ring is disposed between the positive terminal and the first via-hole.

The negative tab is connected to a negative terminal via a negative flexible connecting piece. The lower cover assembly has a second via-hole through which the negative terminal penetrates. A second insulating member such as a second insulating ring is disposed between the negative terminal and the second via-hole.

The lithium-ion battery as described above is labeled as AC1.

### TEST

The lithium-ion batteries A1, A2, A3 and AC1 are charged and discharged at 1C rate for 500 cycles respectively, and then the corrosion of the housing is checked.

The results are shown in Table 1.

**Table 1**

| Battery | Corrosion of the housing |
|---|---|
| A1 | No corrosion |
| A2 | No corrosion |
| A3 | No corrosion |
| AC1 | Seam corrosion |

As shown in Table 1, the lithium batteries A1, A2 and A3 according to an embodiment of the present disclosure may have better corrosion resistance, thus improving the service lifespan and the safety of the battery accordingly.

Although explanatory embodiments have been shown and described, it would be appreciated by those skilled in the art that changes, alternatives, and modifications can be made in the embodiments without departing from the scope of the invention. Such changes, alternatives, and modifications all fall into the scope of the claims and their equivalents.

## Claims

1. A lithium-ion battery, comprising:
a housing (4) made by metal or metal alloy defining an opening end (4a, 4b);
a cover assembly (42a, 42b) sealing the opening end (4a, 4b);
a negative and a positive terminals (11, 21) penetrating through the cover assembly (42a, 42b), which is insulated therefrom respectively;
a battery core (3) positioned within the housing (4) which is electrically connected with the negative and positive terminal (11, 21) respectively; and
an electrolyte filled within a space formed by the housing (4) and the cover assembly (42a, 42b);
**characterized in that**
an electrical protection element (9) is electrically connected between the negative terminal (21) and one of the cover assembly and the housing (4); and
the electrical protection element (9) comprises a PTC resistor.

2. The lithium-ion battery of claim 1, wherein the opening end comprises a first opening end (4a) and a second opening end (4b); and
the cover assembly comprises a first cover assembly (42a) and a second cover assembly (42b) sealing the first open end (4a) and the second open end (4b) of the housing (4) respectively, with the positive terminal (11) penetrating through the first cover assembly (42a) which is insulated therefrom and the negative terminal (21) penetrating through the second cover assembly (4b) which is insulated therefrom.

3. The lithium-ion battery of claim 1 or 2, wherein the battery core (3) comprises a positive plate, a separator and a negative plate winding or overlapping together, with an end of the positive terminal (11) inside the housing (4) electrically connected with the positive plate and an end of the negative terminal (21) inside the housing electrically connected with the negative plate respectively.

4. The lithium-ion battery of any one of claims 1-3, wherein the first cover assembly (42a) is formed with a first via-hole through which the positive terminal (11) is penetrated, with a first insulating seal element (44a) disposed between the first via-hole and the first cover assembly (42a).

5. The lithium-ion battery of any one of claims 1-4, wherein the second cover assembly (42b) is formed with a second via-hole through which the negative terminal (21) is penetrated, with a second insulating seal element (44b) disposed between the second via-hole and the second cover assembly (42b).

6. The lithium-ion battery of any one of claims 1-5, wherein the electrical protection element (9) comprises an insulating layer on a surface thereof.

7. The lithium-ion battery of any one of claims 1-6, wherein the electrical protection element (9) further comprises one or two elements selected from a resistance element and a current fusing element.

8. The lithium-ion battery of any one of claims 1-7, wherein the resistance element has a resistance of about 1 KΩ to about 1000 KΩ; or
the current fusing element has a fusing current greater than about 100A; or
the PTC resistor has a zero-power resistance of about 1 mohm to about 100 mohm and a maximum conduction current of the PTC resistor is about 10 to 100A.

9. The lithium-ion battery of any one of claims 1-8, wherein the positive and negative terminals (11, 21) are connected with tabs of the positive and negative plates (11, 21) via flexible connecting pieces (12a, 12b) respectively.

10. The lithium-ion battery of any one of claims 1-9, wherein the flexible connecting piece (12a) connecting the positive terminal (11) with the tabs of the positive plate is made of a plurality of aluminum foil layers, and the flexible connecting piece (12b) connecting the negative terminal (21) with the tabs of the negative plate is made of a plurality of copper foil layers.

11. The lithium-ion battery of any one of claims 1-10, wherein a first protecting member is configured to be provided on and integrally formed with the first cover assembly (42a), and the first protecting member is formed with a via-hole through which the positive terminal (11) penetrates.

12. The lithium-ion battery of any one of claims 1-11, wherein a second protecting member (41) is configured to be provided on and integrally formed with the second cover assembly (42b), and the second protecting member (41) is formed with a via-hole through which the negative terminal penetrates.

13. The lithium-ion battery of any one of claims 1-12, wherein the electrical protection element (9) is embedded within the second protecting member (41).

14. The lithium-ion battery of any one of claims 1-13, wherein the first and second protecting members are made of at least one material selected from the group consisting of plastic, rubber, and resin.

15. The lithium-ion battery of any one of claims 1-14, wherein each flexible connection piece (12a, 12b) has a S-shape with the tab and the terminal being respectively accommodated in the concave portions (12a1, 12a2, 12b1, 12b2) of the S-shape and connected to the inner walls of the concave portions (12a1, 12a2, 12b1, 12b2) facing toward each other.

## Patentansprüche

1. Lithiumionenbatterie, die Folgendes enthält:
ein Gehäuse (4), das aus einem Metall oder einer Metalllegierungen hergestellt ist und ein offenes Ende (4a, 4b) definiert;
eine Deckelanordnung (42a, 42b), die das offene Ende (4a, 4b) verschließt;
einen negativen und einen positiven Anschluss (11, 21), die durch die Deckelanordnung (42a, 42b) dringen, die von diesen jeweils isoliert ist;
einen Batteriekern (3), der in dem Gehäuse (4) angeordnet ist und mit dem negativen bzw. positiven Anschluss (11, 21) elektrisch verbunden ist; und
einen Elektrolyt, der in einen Raum gefüllt ist, der durch das Gehäuse (4) und die Deckelanordnung (42a, 42b) gebildet ist;
**dadurch gekennzeichnet, dass**
ein elektrisches Schutzelement (9) zwischen dem negativen Anschluss (21) und entweder der Deckelanordnung oder dem Gehäuse (4) elektrisch angeschlossen ist; und
das elektrische Schutzelement (9) einen PTC-Widerstand enthält.

2. Lithiumionenbatterie nach Anspruch 1, wobei das offene Ende ein erstes offenes Ende (4a) und ein zweites offenes Ende (4b) aufweist; und
die Deckelanordnung eine erste Deckelanordnung (42a) und eine zweite Deckelanordnung (42b) aufweist, die das erste offene Ende (4a) bzw. das zweite offene Ende (4b) des Gehäuses (4) verschließen, wobei der positive Anschluss (11) durch die erste Deckelanordnung (42a), die hiervon isoliert ist, dringt und der negative Anschluss (21) durch die zweite Deckelanordnung (4b), die hiervon isoliert ist, dringt.

3. Lithiumionenbatterie nach Anspruch 1 oder 2, wobei der Batteriekern (3) eine positive Platte, einen Separator und eine negative Platte, die miteinander verwunden sind oder miteinander überlappen, enthält, wobei ein Ende des positiven Anschlusses (11) in dem Gehäuse (4) mit der positiven Platte elektrisch verbunden ist und ein Ende des negativen Anschlusses (21) in dem Gehäuse mit der negativen Platte elektrisch verbunden ist.

4. Lithiumionenbatterie nach einem der Ansprüche 1-3, wobei die erste Deckelanordnung (42a) mit einem ersten Durchgangsloch ausgebildet ist, durch das der positive Anschluss (11) dringt, wobei zwischen dem ersten Durchgangsloch und der ersten Deckelanordnung (42a) ein erstes isolierendes Dichtungselement (44a) angeordnet ist.

5. Lithiumionenbatterie nach einem der Ansprüche 1-4, wobei die zweite Deckelanordnung (42b) mit einem zweiten Durchgangsloch ausgebildet ist, durch das der negative Anschluss (21) dringt, wobei zwischen dem zweiten Durchgangsloch und der zweiten Deckelanordnung (42b) ein zweitesisolierendes Dichtungselement (44b) angeordnet ist.

6. Lithiumionenbatterie nach einem der Ansprüche 1-5, wobei das elektrische Schutzelement (9) auf einer seiner Oberflächen eine Isolierschicht aufweist.

7. Lithiumionenbatterie nach einem der Ansprüche 1-6, wobei das elektrische Schutzelement (9) ferner ein oder zwei Elemente aufweist, die aus einem Widerstandselement und einem Stromschmelzelement ausgewählt sind.

8. Lithiumionenbatterie nach einem der Ansprüche 1-7, wobei das Widerstandselement einen Widerstandswert im Bereich von etwa 1 kΩ bis etwa 1000 kΩ besitzt; oder
das Stromschmelzelement einen Schmelzstrom von mehr als etwa 100 A besitzt; oder
der PTC-Widerstand einen Nullleistungs-Widerstandswert von etwa 1 mΩ bis etwa 100 mΩ besitzt und ein maximaler Leitungsstrom des PTC-Widerstands etwa 10 bis 100 A beträgt.

9. Lithiumionenbatterie nach einem der Ansprüche 1-8, wobei der positive oder negative Anschluss (11, 21) über biegsame Verbindungsteile (12a, 12b) mit Laschen der positiven bzw. der negativen Platte (11, 21) verbunden sind.

10. Lithiumionenbatterie nach einem der Ansprüche 1-9, wobei das biegsame Verbindungsteil (12a), das den positiven Anschluss (11) mit den Laschen der positiven Platte verbindet, aus mehreren Aluminiumfolienschichten hergestellt ist und das biegsame Verbindungsteil (12b), das den negativen Anschluss (21) mit den Laschen der negativen Platte verbindet, aus mehreren Kupferfolienschichten hergestellt ist.

11. Lithiumionenbatterie nach einem der Ansprüche 1-10, wobei ein erstes Schutzelement so konfiguriert ist, dass es an der ersten Deckelanordnung (42a) vorgesehen und damit einteilig ausgebildet ist, wobei das erste Schutzelement mit einem Durchgangsloch ausgebildet ist, durch das der positive Anschluss (11) dringt.

12. Lithiumionenbatterie nach einem der Ansprüche 1-11, wobei ein zweites Schutzelement (41) so konfiguriert ist, dass es an der zweiten Deckelanordnung (42b) vorgesehen und damit einteilig ausgebildet ist, wobei das zweite Schutzelement (41) mit einem Durchgangsloch ausgebildet ist, durch das der negative Anschluss dringt.

13. Lithiumionenbatterie nach einem der Ansprüche 1-12, wobei das elektrische Schutzelement (9) in das zweite Schutzelement (41) eingebettet ist.

14. Lithiumionenbatterie nach einem der Ansprüche 1-13, wobei das erste und das zweite Schutzelement aus wenigstens einem Material hergestellt sind, das aus der Gruppe gewählt ist, die aus Kunststoff, Gummi und Harz besteht.

15. Lithiumionenbatterie nach einem der Ansprüche 1-14, wobei jedes biegsame Verbindungsteil (12a, 12b) S-förmig ist, wobei die Lasche und der Anschluss in jeweiligen konkaven Abschnitten (12a1, 12a2, 12b1, 12b2) der S-Form aufgenommen sind und mit den Innenwänden der konkaven Abschnitte (12a1, 12a2, 12b1, 12b2), die einander zugewandt sind, verbunden sind.

## Revendications

1. Batterie au lithium-ion, comportant :
un boîtier (4) constitué d'un métal ou d'un alliage métallique définissant une extrémité d'ouverture (4a, 4b) ;
un assemblage de couvercle (42a, 42b) scellant l'extrémité d'ouverture (4a, 4b);
une borne négative et une borne positive (11, 21) pénétrant à travers l'assemblage de couvercle (42a, 42b), qui sont respectivement isolées l'une de l'autre ;
un noyau de batterie (3) positionné à l'intérieur du boîtier (4) qui est électriquement relié aux bornes négative et positive (11, 21) respectivement ; et
un électrolyte chargé dans un espace formé par le boîtier (4) et l'assemblage de couvercle (42a, 42b) ;
**caractérisée en ce que**
un élément de protection électrique (9) est électriquement relié entre la borne négative (21) et un élément parmi l'assemblage de couvercle et le boîtier (4) ; et
l'élément de protection électrique (9) comporte une résistance PTC.

2. Batterie au lithium-ion selon la revendication 1, dans laquelle l'extrémité d'ouverture comporte une première extrémité d'ouverture (4a) et une seconde extrémité d'ouverture (4b) ; et
l'assemblage de couvercle comporte un premier assemblage de couvercle (42a) et un second assemblage de couvercle (42b) scellant la première extrémité d'ouverture (4a) et la seconde extrémité d'ouverture (4b) du boîtier (4) respectivement, la borne positive (11) pénétrant à travers le premier assemblage de couvercle (42a) qui est isolé par rapport à celle-ci et la borne négative (21) pénétrant travers le second assemblage de couvercle (4b) qui est isolé par rapport à celle-ci.

3. Batterie au lithium-ion selon la revendication 1 ou 2, dans laquelle le noyau de batterie (3) comporte une plaque positive, un séparateur et une plaque négative s'enroulant ensemble ou se chevauchant, une extrémité de la borne positive (11) à l'intérieur du boîtier (4) étant électriquement reliée à la plaque positive et une extrémité de la borne négative (21) à l'intérieur du boîtier étant électriquement reliée à la plaque négative respectivement.

4. Batterie au lithium-ion selon l'une quelconque des revendications 1 à 3, dans laquelle le premier assemblage de couvercle (42a) est formé avec un premier trou d'interconnexion à travers lequel pénètre la borne positive (11), un premier élément de joint isolant (44a) étant disposé entre le premier trou d'interconnexion et le premier assemblage de couvercle (42a).

5. Batterie au lithium-ion selon l'une quelconque des revendications 1 à 4, dans laquelle le second assemblage de couvercle (42b) est formé avec un second trou d'interconnexion à travers lequel pénètre la borne négative (21), un second élément de joint isolant (44b) étant disposé entre le second trou d'interconnexion et le second assemblage de couvercle (42b).

6. Batterie au lithium-ion selon l'une quelconque des revendications 1 à 5, dans laquelle l'élément de protection électrique (9) comporte une couche d'isolation sur une surface de celui-ci.

7. Batterie au lithium-ion selon l'une quelconque des revendications 1 à 6, dans laquelle l'élément de protection électrique (9) comporte en outre un ou deux éléments choisis parmi un élément de résistance et un élément à courant de claquage.

8. Batterie au lithium-ion selon l'une quelconque des revendications 1 à 7, dans lequel l'élément de résistance a une résistance d'environ 1 kΩ à environ 1 000 kΩ ; ou l'élément à courant de claquage a un courant de claquage supérieur à environ 100 A ; ou
la résistance PTC a une résistance à puissance nulle d'environ 1 mohm à environ 100 mohm et un courant de conduction maximal de la résistance PTC est d'environ 10 à 100 A.

9. Batterie au lithium-ion selon l'une quelconque des revendications 1 à 8, dans laquelle les bornes positive et négative (11, 21) sont raccordées à des languettes des plaques positive et négative (11, 21) via des pièces de connexion souples (12a, 12b) respectivement.

10. Batterie au lithium-ion selon l'une quelconque des revendications 1 à 9, dans laquelle la pièce de connexion souple (12a) reliant la borne positive (11) aux languettes de la plaque positive est constituée d'une pluralité de couches de feuille d'aluminium, et la pièce de connexion souple (12b) reliant la borne négative (21) aux languettes de la plaque négative est constituée d'une pluralité de couches de feuille de cuivre.

11. Batterie au lithium-ion selon l'une quelconque des revendications 1 à 10, dans laquelle un premier élément de protection est configuré pour être agencé sur le premier assemblage de couvercle (42a) et être formé solidaire de celui-ci, et le premier élément de protection est formé avec un trou d'interconnexion à travers lequel pénètre la borne positive (11).

12. Batterie au lithium-ion selon l'une quelconque des revendications 1 à 11, dans laquelle un second élément de protection (41) est configuré pour être agencé sur le second assemblage de couvercle (42b) et être formé solidaire de celui-ci, et le second élément de protection (41) est formé avec un trou d'interconnexion à travers lequel pénètre la borne négative.

13. Batterie au lithium-ion selon l'une quelconque des revendications 1 à 12, dans laquelle l'élément de protection électrique (9) est intégré à l'intérieur du second élément de protection (41).

14. Batterie au lithium-ion selon l'une quelconque des revendications 1 à 13, dans laquelle les premier et second éléments de protection sont constitués d'au moins un matériau choisi parmi le groupe constitué d'une matière plastique, d'un caoutchouc et d'une résine.

15. Batterie au lithium-ion selon l'une quelconque des revendications 1 à 14, dans laquelle chaque pièce de connexion souple (12a, 12b) a une forme en S, la languette et la borne étant respectivement reçues dans les parties concaves (12a1, 12a2, 12b1, 12b2) de la forme en S et étant reliées aux parois intérieures des parties concaves (12a1, 12a2, 12b1, 12b2) dirigées les unes vers les autres.
